# EUROPÄISCHE PATENTANMELDUNG

(11) **EP 0 873 678 A1**
(43) Veröffentlichungstag der Anmeldung: **28.10.1998**
(21) Anmeldenummer: 98105923.1
(22) Anmeldetag: 01.04.1998
(51) Int. Cl.: A01C 17/00

(54) **Schleuderdüngersteuer**

(30) Priorität: 24.04.1997 DE 19717286
(71) Anmelder: Amazonen-Werke H. Dreyer GmbH & Co. KG, D-49205 Hasbergen (DE)
(72) Erfinder: Dreyer, Heinz, Dr. Dipl.-Ing., 49205 Hasbergen (DE)

(57) **Zusammenfassung**

Schleuderdüngerstreuer mit zumindest zwei Vorratsbehältern für die getrennte Mitführung von zumindest zwei verschiedenen Düngersorten, wobei jedem Vorratsbehälter jeweils zumindest zwei eigene Dosierorgane und zumindest zwei eigene Schleuderscheiben zugeordnet sind, wobei das jeweilige Dosierorgan den ihm zugeordneten Verteilorgan den auszubringenden Dünger in einstellbarer Weise zuleitet, wobei die verschiedenen Düngersorten von jeweils verschiedenen Teilorganen verteilt werden, wobei die die verschiedenen Düngersorten verteilende Verteilorgane in unterschiedlichen Höhen angeordnet sind. Die Schleuderscheiben sind übereinander angeordnet und deren Drehachsen fallen zusammen.

## Beschreibung

Die Erfindung betrifft einen Schleuderdüngerstreuer gemäß des Oberbegriffes des Patentanspruches 1.

Ein derartiger Schleuderdüngerstreuer ist in der EP-04 97 166 A1 beschrieben. Bei diesem Schleuderdüngerstreuer sind die seitlichen Dosierorgane mit den zugehörigen Schleuderscheiben in einer höheren Ebene als die Dosierorgane und die zugehörigen Schleuderscheiben für die mittleren Schleuderscheiben angeordnet. Hierdurch ergibt sich eine sehr breite Bauweise des Schleuderdüngerstreuers.

Der Erfindung liegt die Aufgabe zugrunde, einen möglichst kompakt bauenden Schleuderstreuer zu schaffen.

Diese Aufgabe wird erfindungsgemäß dadurch gelöst, daß die Schleuderscheiben übereinander angeordnet sind, und daß deren Drehachsen zusammenfallen. Infolge dieser Maßnahmen ergibt sich eine kompaktere Bauweise des Schleuderdüngerstreuers und eine vorteilhaftere Anordnung der Schleuderscheiben und Dosierorgane.

Um das Material den Schleuderscheiben zuleiten zu können, sind zwischen den Trichterenden der Vorratsbehälter und den Schleuderscheiben Materialzuleitungselemente angeordnet. Hierbei ist jeder Schleuderscheibe ein Materialzuleitungselement zugeordnet.

Um mit dem an sich für die Ausbringung von mehreren Sorten Material vorgesehenen Düngerstreuer nur eine Sorte Material oder mehrere Sorten Material mit einer Schleuderscheibe ausbringen zu können, ist vorgesehen, daß die den einander zugeordneten Materialzuleitungselementen derart ausgebildet sind, daß das der oberen Schleuderscheibe zuleitende Element in eine derartige Stellung bringbar ist, daß das Material aus beiden Vorratsbehältern der unteren Scheibe zuleitbar ist.

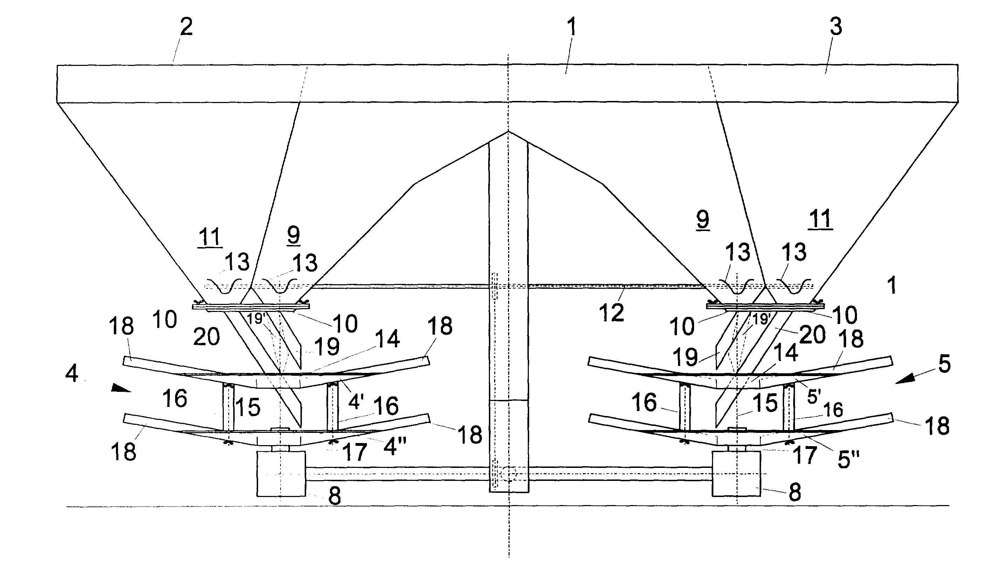

Weitere Einzelheiten der Erfindung sind der Beispielsbeschreibung und der Zeichnung zu entnehmen. Die Zeichnung zeigt den Schleuderdüngerstreuer in der Ansicht von hinten und in Prinzipdarstellung.

Der Schleuderdüngerstreuer weist die mittleren Vorratsbehälter 1 und die beiden seitlichen Vorratsbehälter 2 und 3 auf. Der mittlere Vorratsbehälter 1 ist für die Aufnahme der einen Materialsorte und die beiden seitlichen Vorratsbehälter 2 und 3 für die Aufnahme der weiteren Materialsorte vorgesehen. Dem Schleuderdüngerstreuer ist weiterhin ein nicht dargestellter Rahmen zugeordnet. An diesem Rahmen sind die die Schleuderscheiben 4, 5 antreibenden Winkelgetriebe 8 angeordnet. Den Trichterenden 9 des mittleren Vorratsbehälters 1 sind Dosierorgane 10 zugeordnet. Den unteren Trichterenden 11 der seitlichen Vorratsbehälter 2 und 3 sind ebenfalls Dosierorgane 10 zugeordnet. In den unteren Bereichen der Trichterenden 9 und 11 ist eine horizontal verlaufende Rührwelle 12 mit Rührelementen 13 angeordnet. Diese Rührwelle 12 wird rotierend angetrieben.

Die Schleuderscheiben 4, 5 sind als doppelstöckige Schleuderscheiben ausgebildet, wobei die obere Schleuderscheibe 4' und 5' in der Mitte eine vorzugsweise kreisförmige Aussparung 14 aufweist. Die beiden Schleuderscheiben 4', 4'' und 5', 5'' sind derart angeordnet, daß deren Drehachsen 15 zusammenfallen. Die obere Schleuderscheibe 4', 5' ist über die Verbindungselemente 16 mit der unteren Schleuderscheibe 4'', 5'' verbunden. Die untere Schleuderscheibe 4'', 5'' ist mittels geeigneter Verbindungselemente mit der Antriebswelle 17 des jeweiligen Winkelgetriebes 8 verbunden. Auf den Schleuderscheiben 4', 4'', 5' und 5'' sind Wurfschaufeln 18 in bekannter und daher nicht näher dargestellter Weise angeordnet. Zwischen den an der Unterseite der Trichterenden 9, 11 angeordneten Dosierelementen 10 und den Schleuderscheiben 4', 4'', 5', 5'' sind die Materialzuleitungselemente 19 und 20, die als Rutschen ausgebildet sind, angeordnet. Jeder Schleuderscheibe 4', 4'', 5', 5'' ist ein Materialzuleitungselement 19 oder 20 angeordnet. Das Material aus dem mittleren Vorratsbehälter 1 wird jeweils der oberen Schleuderscheibe 5' Zugeleitet, während das Material aus den seitlichen Vorratsbehältern 2, 3 der unteren Schleuderscheibe 4'', 5'' zugeleitet wird. Das obere Materialzuleitungselement 19 kann in die mit strichpunktierten Linien dargestellte Stellung 19' geschwenkt werden, so daß das Material auch aus diesen Vorratsbehälter 2, 3 der unteren Schleuderscheibe 4'', 5'' zugeleitet wird.

## Patentansprüche

1. Schleuderdüngerstreuer mit zumindest zwei Vorratsbehältern für die getrennte Mitführung von zumindest zwei verschiedenen Düngersorten, wobei jedem Vorratsbehälter jeweils zumindest zwei eigene Dosierorgane und zumindest zwei eigene Schleuderscheiben zugeordnet sind, wobei das jeweilige Dosierorgan den ihm zugeordneten Verteilorgan den auszubringenden Dünger in einstellbarer Weise zuleitet, wobei die verschiedenen Düngersorten von jeweils verschiedenen Teilorganen verteilt werden, wobei die die verschiedenen Düngersorten verteilende Verteilorgane in unterschiedlichen Höhen angeordnet sind, dadurch gekennzeichnet, daß die Schleuderscheiben (4, 4', 4'', 5, 5', 5'') übereinander angeordnet sind, und daß deren Drehachsen (15) zusammenfallen.

2. Schleuderdüngerstreuer nach Anspruch 1, dadurch gekennzeichnet, daß zwischen den Trichterenden (9, 11) der Vorratsbehälter (1, 2, 3) und den Schleuderscheiben (4, 4', 4'', 5, 5', 5'') Materialzuleitungselemente (19, 20) angeordnet sind.

3. Schleuderdüngerstreuer nach Anspruch 1, dadurch gekennzeichnet, daß jeder Schleuderscheibe (4', 4'', 5', 5'') ein Materialzuleitungselement (19, 20) zugeordnet ist.

4. Schleuderdüngerstreuer nach einem oder mehreren der vorstehenden Ansprüche, dadurch gekennzeichnet, daß die den übereinander angeordneten Schleuderscheiben (4', 4'', 5', 5'') zugeordneten Materialzuleitungselemente (19, 20) derart ausgebildet sind, daß das der oberen Schleuderscheibe (4', 5') zuleitende Element (19) in eine derartige Stellung (19') bringbar ist, daß das Material aus beiden Vorratsbehältern (2, 3) der unteren Scheibe (4'', 5'') zuleitbar ist.
